Europäisches Patentamt

European Patent Office

Office européen des brevets

(19)

(11) **EP 1 510 968 A2**

(12) **EUROPEAN PATENT APPLICATION**

(43) Date of publication:
**02.03.2005  Bulletin 2005/09**

(51) Int Cl.$^7$: **G06T 3/40**

(21) Application number: **04020143.6**

(22) Date of filing: **25.08.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **01.09.2003  JP 2003308727**

(71) Applicant: **Konica Minolta Medical & Graphic Inc.
Tokyo 163-0512 (JP)**

(72) Inventors:
• **Nakazawa, Masayuki Konica Minolta Medical &
Hachioji-shi Tokyo, 192-8505 (JP)**
• **Yamano, Akira
Konica Minolta Med. & Graphic, Inc.
Hachioji-shi Tokyo, 192-8505 (JP)**

(74) Representative: **Wenning, Ekkehard
Patentanwälte
Henkel, Feiler & Hänzel
Möhlstrasse 37
81675 München (DE)**

(54) **Medical image recorder**

(57)    There is described a medical-image recording apparatus that can output medical images having a plurality of different pixel sizes without deterioration of image quality. The apparatus includes an image recording section to record the medical image onto a recording medium with a writing pitch selected from a plurality of writing pitches P1 --- Pn (P1 < P2 < --- < Pn, n ≥ 2); an interpolating-magnification-factor determining section to determine an interpolating magnification factor, corresponding to a reading pitch employed for reading the medical image and each of the plurality of writing pitches P1 --- Pn; an image interpolating section to apply an image interpolation processing to the medical image, based on the interpolating magnification factor; and a writing-pitch selecting section to select an appropriate writing pitch out of the plurality of writing pitches P1 --- Pn. The appropriate writing pitch fulfills a specific relationship.

EP 1 510 968 A2

## Description

## BACKGROUND OF THE INVENTION

The present invention relates to a medical image output apparatus for converting an image signal inputted by a plurality of different image signal sources into an image signal suitable for the image signal source and outputting a medical image.

Conventionally, methods have been developed to obtain medical radiation image information without using radiographic film made of silver-halide photosensitive material. For example, a radiation image reading apparatus (Computed Radiography: hereinafter, referred to as "CR") has been popular which stores a radiation image by using an imaging plate mainly made of stimulable phosphor, retrieves the image as photo-stimulated luminescence by using an excitation light, and then photo-electrically converts the luminescence, thereby obtaining an image signal. Furthermore, an apparatus (Flat Panel Detector: hereafter, referred to as "FPD") for reading radiation image information by combining a radiation phosphor or radiation photoconductor with a two-dimensional semiconductor detector, such as a TFT switching element, has recently been proposed.

When diagnosing disease by observing such medical images, in most cases, images are hardcopied by recording image information on a transmission-type recording medium or on a reflection-type recording medium and then observed. A popular, well-known medical image recorder for recording medical image information on a recording medium is a system for recording an image on a transmission-type recording medium that uses silver-halide based recording material by means of laser exposure. This system reproduces an excellent monochrome tone image and it is a highly reliable diagnostic tool when an image is recorded on a transmission-type medium and observed by a transmitted light. A variety of medical image recorders other than the conventional apparatus which uses silver-halide based recording material that requires wet processing have been developed, such as a thermal recorder using a thermal head and heat mode laser, and an apparatus for recording images by means of photosensitive thermal color development using photosensitive heat-development recording material.

[Patent Document 1]

Tokkai 2000-332993

A variety of image recorders for recording images by using image data obtained by the CR or FPD have been developed. An image scanned by the CR or FPD is in most cases required to be outputted in the same size as the subject, which is an affected area to be diagnosed (hereinafter, referred to as life size), because of the conventional use of simple X-ray photographs. Herein, when a life-size image of an affected area is outputted, if the reading pixel size of the CR is different from the recording pixel size of the image recorder which outputs a diagnostic image as a hardcopy, interpolation enlargement processing is necessary. For example, if the reading pixel is 87.5 μm and the recording pixel of an image recorder is 80 μm, interpolation enlargement processing of approximately 1.09 times is necessary to output a life-size image.

Generally, such interpolation enlargement processing of non-integral multiple by means of spline interpolation, etc. causes the frequency characteristics of the image to deteriorate; consequently, the sharpness of the image decreases, which is not suitable for a diagnostic image. Furthermore, if interpolation processing of non-integral multiple is carried out by means of replication, image distortion can be clearly seen, which is not suitable for a diagnostic image.

Therefore, it is preferable that the recording pixel size of an image recorder for outputting a diagnostic image as a hardcopy be $1/n$ ($n$ = integer) of the image reading pixel size. For example, in the image recorder disclosed in Published Unexamined Japanese Patent Application No.2000-332993, the recording pixel is set at 50 μm which is most suitable for the image which has been read at a pixel size of 100 μm (see Patent Document 1).

However, recently, a plurality of CR and FPD are connected to an image recorder via a network, and therefore, in hospitals there are images having different reading pixel sizes. Therefore, it is impossible for an image recorder, disclosed in Published Unexamined Japanese Patent Application No.2000-332993, to output life-size images having different pixel sizes without deterioration of image quality.

## SUMMARY OF THE INVENTION

To overcome the abovementioned drawbacks in conventional medical-image recording apparatus, it is an object of the present invention to provide a medical-image recording apparatus that can output medical images having a plurality of different pixel sizes without deterioration of image quality.

Accordingly, to overcome the cited shortcomings, the abovementioned object of the present invention can be attained by medical-image recording apparatus described as follow.

(1) An apparatus for recording a medical image, comprising:

an image recording section to record the medical image onto a recording medium with a writing pitch selected from a plurality of writing pitches P1 --- Pn, which fulfill the following relationship,
$$P1 < P2 < --- < Pn, \quad n \geq 2;$$

an interpolating-magnification-factor determining section to determine an interpolating magnification factor, corresponding to a reading pitch employed for reading the medical image and each of the plurality of writing pitches P1 --- Pn; an image interpolating section to apply an image interpolation processing to the medical image, based on the interpolating magnification factor determined by the interpolating-magnification-factor determining section; and a writing-pitch selecting section to select an appropriate writing pitch out of the plurality of writing pitches P1 ---Pn; wherein the appropriate writing pitch fulfills the following relationship,

$$1.0 < Pi/P1 < 1.9$$

where Pi: the appropriate writing pitch,

$$i = 2, ---, n.$$

(2) The apparatus of item 1, wherein the appropriate writing pitch fulfills the following relationship,

$$1.1 < Pi/P1 < 1.7$$

where Pi: the appropriate writing pitch,

$$i = 2, ---, n.$$

(3) The apparatus of item 1, wherein the writing-pitch selecting section selects the appropriate writing pitch out of the plurality of writing pitches P1 ---Pn, based on the interpolating magnification factor determined by the interpolating-magnification-factor determining section.
(4) The apparatus of item 1, wherein, with respect to the plurality of writing pitches P1 --- Pn, the following equation is fulfilled,

$$n \geq 3.$$

(5) The apparatus of item 1, wherein, with respect to writing pitch P1, the following equation is fulfilled,

$$P1 \leq 50 \ \mu m.$$

(6) The apparatus of item 1, wherein, with respect to writing pitch P1, the following equation is fulfilled,

$$P1 \leq 35 \ \mu m.$$

(7) The apparatus of item 1, wherein a silver-halide photo-thermal recording method is employed in the image recording section to record the medical image onto the recording medium.
(8) An apparatus for recording a medical image, comprising:

an image recording section to record the medical image onto a recording medium with a writing pitch selected from a plurality of writing pitches P1 --- Pn, which fulfill the following relationship,

$$P1 < P2 < --- < Pn, n \geq 2;$$

an interpolating-magnification-factor determining section to determine an interpolating magnification factor, corresponding to a reading pitch employed for reading the medical image and each of the plurality of writing pitches P1 --- Pn; an image interpolating section to apply an image interpolation processing to the medical image, based on the interpolating magnification factor determined by the interpolating-magnification-factor determining section; and a writing-pitch selecting section to select an appropriate writing pitch out of the plurality of writing pitches P1 ---Pn; wherein each of the plurality of writing pitches P1 ---Pn fulfills the following relationship,

$$1.05 < P(j + 1)/Pj < 1.4$$

where Pj: j = 1, 2, ---, n.
(9) The apparatus of item 8, wherein the writing-pitch selecting section selects the appropriate writing pitch out of the plurality of writing pitches P1 ---Pn, based on the interpolating magnification factor determined by the interpolating-magnification-factor determining section.
(10) The apparatus of item 8, wherein, with respect to the plurality of writing pitches P1 --- Pn, the following equation is fulfilled,

$$n \geq 3.$$

(11) The apparatus of item 8, wherein, with respect to writing pitch P1, the following equation is fulfilled,

$$P1 \leq 50 \ \mu m.$$

(12) The apparatus of item 8, wherein, with respect to writing pitch P1, the following equation is fulfilled,

P1 ≤ 35 μm.

(13) The apparatus of item 8, wherein a silver-halide photo-thermal recording method is employed in the image recording section to record the medical image onto the recording medium.

According to the present invention, the following effects can be attained.

Even when the use of minimum writing pitch P1 greatly deteriorates image quality, it is possible to switch to a different writing pitch to record medical images, and therefore, high-quality medical images can be formed with a minimum deterioration of the image quality.

More preferred writing pitch can be selected which does not deteriorate image quality. As a result, high-quality medical images can be formed.

By using the most suitable writing pitch to record medical images having a plurality of different reading pitches, it is possible to minimize deterioration of image quality caused by image interpolation processing.

Because preferred writing pitch for medical images having a variety of different reading pitches can be selected according to the interpolation magnification, high-quality medical images can be formed while deterioration of image quality, such as decrease in sharpness or image distortion caused by the image interpolation processing, can be minimized.

Medical images having a wider range of reading pitch can be processed, and therefore, it is possible to provide a medical image recorder with general-purpose properties.

Medical images which must be superfine due to diagnostic requirement can be recorded by using optimal writing pitch.

Medical images which must be especially superfine due to diagnostic requirement can be recorded by using optimal writing pitch.

It is possible to record medical images on recording media without the need for wet processing.

## BRIEF DESCRIPTION OF THE DRAWINGS

Other objects and advantages of the present invention will become apparent upon reading the following detailed description and upon reference to the drawings in which:

Fig. 1 shows the configuration of a medical image system 100 of an embodiment according to the present invention;
Fig. 2 is a functional block diagram of an image recorder 2 shown in Fig. 1;
Fig. 3 explains the image interpolation processing for the two-dimensional image signal;

Fig. 4 explains interpolation enlargement processing of 1.5 times;
Fig. 5 (a) shows the interpolation coefficient used for calculating pixel data of pixel PX1 shown in Fig. 4, and Fig. 5 (b) shows the interpolation coefficient used for calculating pixel data of pixel PX2 shown in Fig. 4;
Fig. 6 shows a histogram of the closest distance when interpolation magnification is changed;
Fig. 7 is a schematic diagram of the closest distance when the closest distance distribution is uniform;
Fig. 8 shows the visually evaluated results of an image which has been first radiographed, converted into a digital image signal, and then outputted based on the signal by a photothermal silver-halide imager;
Fig. 9 shows the results of the sensory evaluation shown in Fig. 8;
Fig. 10 shows a table which associates preferred reading pitches with writing pitches; and
Fig. 11 shows the evaluation results of the medical image diagnostic performance when there are one to three selectable writing pitches.

## DETAILED DESCRIPTION OF THE PREFERRED EMBODIMENT

Hereafter, an embodiment of the present invention will be explained in detail with reference to the drawings. However, the range of the invention is not to be considered limited to what is shown in the drawings.

First, the configuration of this embodiment will be described.

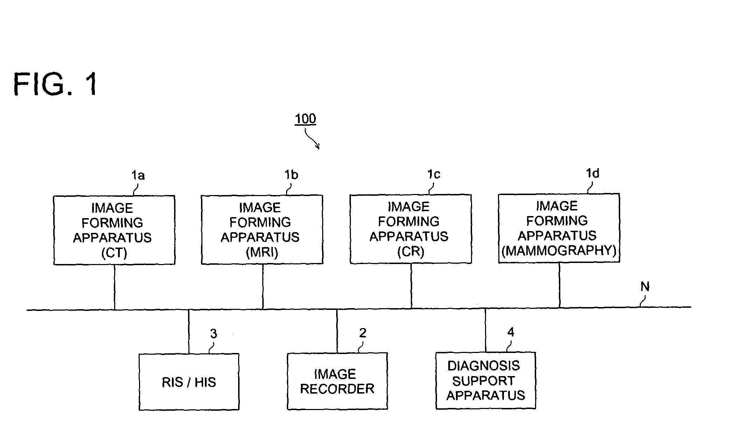

Fig. 1 is a conceptual diagram showing the configuration of a medical image system 100 in this embodiment. As Fig. 1 shows, image forming apparatuses 1a through 1d, an image recorder 2, HIS/RIS 3, and a diagnosis support apparatus 4 are connected via network N to integrate into a medical image system 100 so that those apparatuses can mutually send and receive data.

Network N can be any communication line, such as a LAN (Local Area Network), WAN (Wide Area Network), or the Internet. In addition, wireless communication or infrared radiation communication can be used provided that its use is permitted in a medical institution such as a hospital. However, in that case, the transmitted data includes important patient information, therefore, it is preferable to encrypt the information transmitted. A communication system generally used in a hospital is in accordance with the DICOM (Digital Image and Communications in Medicine) standards. The DICOM MWM (Modality Worklist Management) or DICOM MPPS (Modality Performed Procedure Step) is used for the communication between the aforementioned image forming apparatuses 1a through 1c and the image recorder 2.

The HIS/RIS 3 is an information system which is integrated throughout a hospital via network N and consists of a server for managing the entire system, terminals, and database. Specifically, the HIS/RIS 3 is used to receive orders for medical image photography and manage examination data and photographed medical images.

Image forming apparatuses 1a through 1d are, for example, a CR, FPD, CT, MRI, mammography apparatus, etc. which photograph a subject, convert the photographed image into a digital signal, and form a medical image. In this embodiment, an explanation is given based on the premise that image forming apparatus 1a is a CT, image forming apparatus 1b is an MRI, image forming apparatus 1c is a CR, and image forming apparatus 1d is a mammography apparatus.

An image recorder 2 receives image data from medical image forming apparatuses 1a through 1d and outputs hardcopy on which the image data is reproduced as visible images. For example, the image recorder 2 can be any dry printer which uses an X-ray laser, heat mode laser, thermal head, etc. An image recorder 2 in this embodiment provides a plurality of writing pitches to be selected when recording image data having different reading pixel sizes which has been supplied by a plurality of image forming apparatuses 1a through 1d. Consequently, it is possible to select an optimal interpolation magnification for image interpolation processing so as to minimize the deterioration of image quality when outputting a life size image which is the same size as an affected area.

A diagnosis support apparatus 3 analyzes image data obtained by medical image forming apparatuses 1a through 1d and provides support information to a doctor who is using the images for diagnosing. It is effective for the doctor to diagnose while observing a hardcopy obtained by the image recorder 2 and referring to the support information.

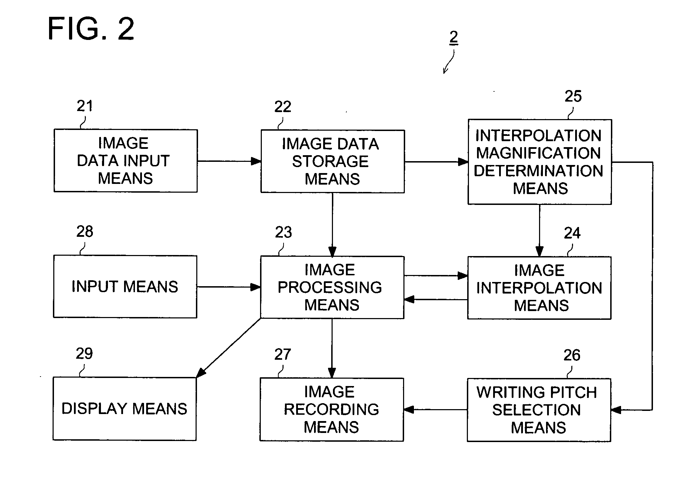

Next, the image recorder 2 will be explained in detail with reference to Fig. 2. Fig. 2 is a functional block diagram of the image recorder 2. As Fig. 2 shows, the image recorder 2 consists of an image data input means 21, image data storage means 22, image processing means 23, image interpolation means 24, interpolation magnification determination means 25, writing pitch selection means 26, image recording means 27, input means 28, and display means 29.

The image data input means 21 receives a digitally-converted medical image sent from the medical image forming apparatuses 1a through 1c via network N. The image data input means 21 can be designed to read medical image data from storage media, such as a CD-ROM (Compact Disk Read Only Memory) or floppy disk (registered trademark), on which photographed medical image data has been recorded.

The image data input means 21 can also be a laser digitizer which is configured separately from the image recorder 2, and the image data input means 21 can be configured such that it uses a laser beam to scan the film on which the patient's photographed medical image has been recorded, measures the amount of transmitted light and converts the measured analog value into digital data, thereby inputting the digital medical image data into the image recorder 2.

Moreover, the image data input means 21 is not to be considered limited to a laser digitizer. For example, the image data input means 21 can use a photo detection element, such as a CCD (Charge Coupled Device), so that the CCD optically scans the film on which a medical image is recorded, photoelectrically converts the reflected light, and inputs the digital image data.

Furthermore, instead of reading a medical image recorded on the film, the image data input means 21 may be connected to a photographing apparatus which uses an accumulative phosphor to convert the photographed medical image into digital medical image data.

Moreover, the image data input means 21 can be connected to an FPD which photographs a radiation image and outputs the image as an electrical signal, and digital image data is inputted from the FPD. As disclosed in Published Unexamined Japanese Patent Application No. Hei 6-342098, the FPD consists of a radiation detection element for creating electric charges according to the intensity of the irradiated radiation and a capacitor for accumulating electric charges formed by the radiation detection element in such a way that the radiation detection element and the capacitor are arranged in two dimensions.

Furthermore, as disclosed in Published Unexamined Japanese Patent Application No. Hei 9-90048, the image data input means 21 can be equipped with a photo detector in which a photo detection element, such as a photodiode, CCD, CMOS (Complementary Metal-Oxide Semiconductor) sensor, which detects the fluorescence intensity, is provided for each pixel. In such a configuration, the radiation is absorbed by a phosphor layer of the radiographic intensifying screen thereby generating fluorescence, the intensity of the fluorescence is detected by the photo detector, and the data is photoelectrically converted into digital medical image data, and finally the digital data is inputted. Furthermore, the image data input means 21 can be configured by combining a radiation scintillator for emitting visible light by means of radiation irradiation with lens eye and an area sensor which corresponds to each lens.

Medical image data inputted by the image data input means 21 has a header area in which medical image information is recorded in accordance with the DICOM standards. The medical image information includes patient information such as a photographed patient's name, patient ID (ID for identifying each patient), gender, photograph information such as the area of the body that was photographed, date of photographing, etc., and associated information such as examination ID (ID for identifying each examination) for indicating the examination to which the image belongs.

An image data storage means 22 is made up of a magnetically or optically recording medium or semiconductor memory, and stores medical image data inputted by the image data input means 21. When data is stored, data is compressed if necessary. For data compression, lossless compression or lossy compression can be applied by means of the commonly-used JPEG, DPCM, or wavelet compression method. However, lossless compression is preferred because data compression does not deteriorate image data.

An image processing means 23 processes medical image data inputted by the image data storage means 22 in various image processing procedures and outputs the processed image data to the image recording means 23. The image processing procedures include tone processing for adjusting image contrast, contrast correction processing, frequency enhancement processing for adjusting image sharpness, and dynamic range compression processing for adjusting an image having a wide dynamic range within the density range that facilitates observation without decreasing contrast of the detailed parts of the subject.

An image interpolation means 24 carries out image interpolation processing of the inputted medical image data according to an interpolation magnification inputted by the interpolation magnification determination means 25, and then outputs the data to the image processing means 23.

Hereafter, the image interpolation processing will be explained. The image interpolation processing is to re-sample an image in relation to the sample points. Specifically, the image interpolation processing means to connect adjacent sample points by using a smooth curve thereby re-sampling the image. Herein, the sample point means image signal arrangement data, and it premises that both the original image signal arrangement data and the interpolated image signal arrangement data is expressed by the two-dimensional tetragonal lattice.

In the case:

Sampling interval before image interpolation processing: $\Delta Xorg$
Sampling interval after image interpolation processing: $\Delta Xproc$

interpolation magnification R is defined as

$$R = \Delta Xorg/\Delta Xproc$$

The processing is called enlargement interpolation in the case R > 1, reduction interpolation in the case of R < 1, and equal interpolation in the case R = 1. Furthermore, $\Delta Xorg$ corresponds to the reading pitch of the image forming apparatuses 1a through 1d, and $\Delta Xproc$ corresponds to the writing pitch of the image recorder 2.

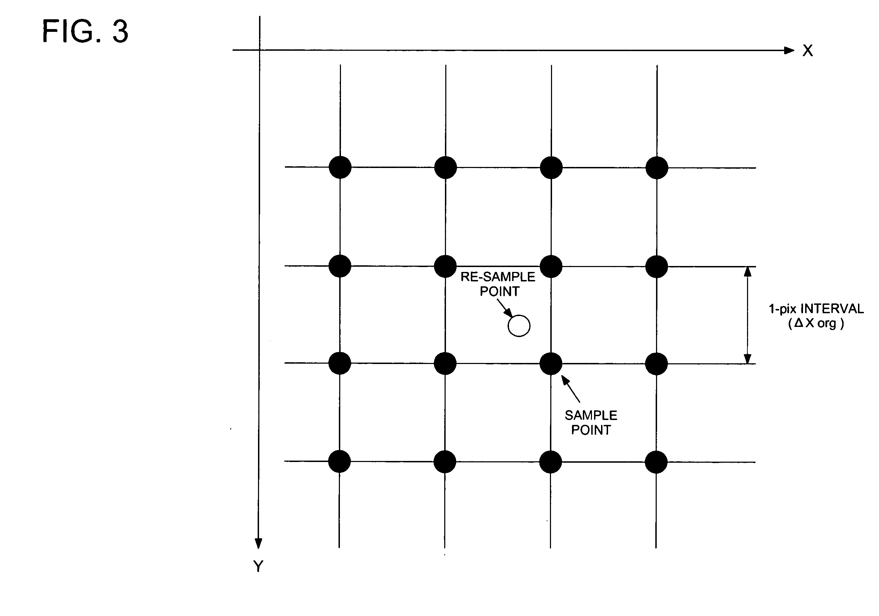

Fig. 3 is an explanatory diagram of the image interpolation processing for the two-dimensional image signal. In Fig. 3, the black circle (E) indicates a sample point which is the coordinates that correspond to each pixel data before image interpolation processing is applied. The white circle (B) indicates a re-sample point which is the coordinates that correspond to each pixel data to which image interpolation processing has been applied. The interval of the tetragonal lattice is the sampling interval $\Delta Xorg$ before image interpolation processing is applied.

Pixel data marked with white circle (B) is calculated according to the product-sum operation using adjacent n x n pixel data. For example, when using 4 x 4 pixel data, the calculation is carried out by using 16 point pixel data as shown in Fig. 3. Details of the image interpolation processing are disclosed in Published Unexamined Japanese Patent Application No. Hei 9-97330.

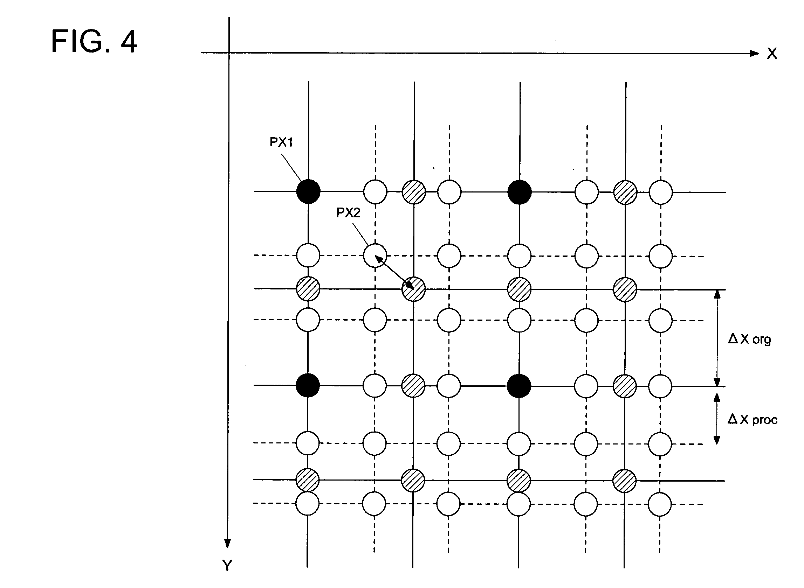

Fig. 4 is an explanatory diagram of the interpolation enlargement processing of 1.5 times. The hatched circle represents the coordinates of pixel data before the image interpolation processing is applied, white circle (B) represents the coordinates of pixel data after the image interpolation processing has been applied, and black circle (E) represents the coordinates which are the same before and after the image interpolation processing. An interval of the tetragonal lattice shown as a solid line is the sampling interval $\Delta Xorg$ before the image interpolation processing is applied, and an interval of the tetragonal lattice shown as a broken line is the sampling interval $\Delta Xproc$ after the image interpolation processing has been applied.

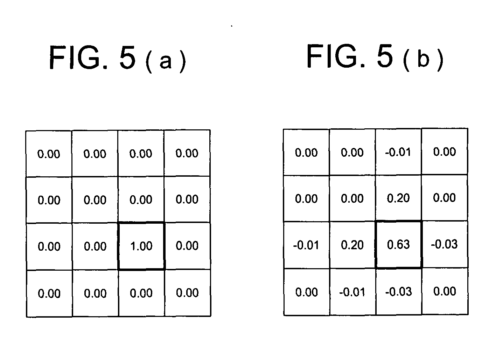

Fig. 5 shows an example of the interpolation coefficient. A numerical value in each lattice indicates an interpolation coefficient of each pixel. Fig. 5(a) is the interpolation coefficient used for calculating pixel data of pixel PX1 shown in Fig. 4. Since the coordinates before and after the image interpolation processing coincide, the interpolation coefficient of the pixel data of the coordinates is 1, and interpolation coefficients of other pixels are all 0. Fig. 5(b) is the interpolation coefficient in the case where pixel data of pixel PX2, shown in Fig. 4, is calculated. The interpolation coefficient at the closest point is 0.63, and some other interpolation coefficients are numerical values other than 0.

A general characteristic of the image interpolation is that pixel data changes according to the distance (hereafter, referred to as "the closest distance") between the re-sample point and the sample point which is the closest to the sample point currently being dealt with. As the closest distance is reduced, the interpolation coefficient at the sample point approaches the numerical value of 1 which closely matches the pixel data currently being dealt with. On the other hand, as the closest distance is increased, the interpolation coefficient at the reference sample point approaches the numerical value of 0 and the pixel data involved tends to be affected by other pixel data. Therefore, the length of the closest distance can influence image quality. That is, when the closest distance is short, information contained in the original image signal is maintained, and when the closest distance is long, information contained in the original image signal may deteriorate.

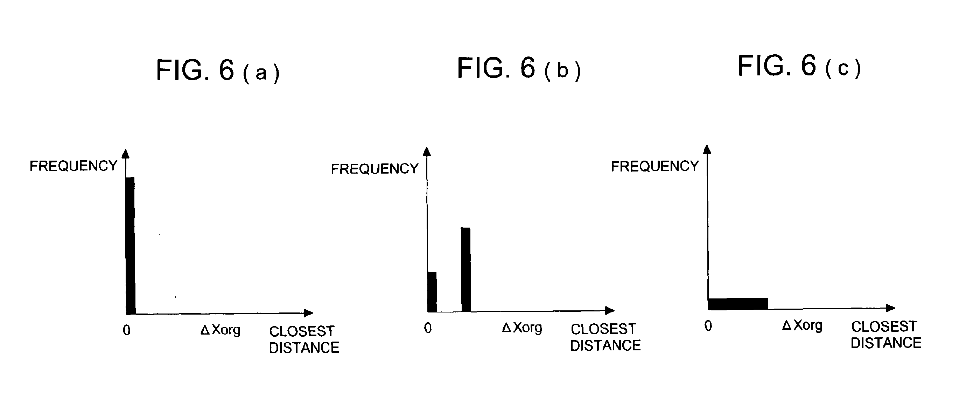

Fig. 6 shows the histogram of the closest distance when the interpolation magnification is changed. To make it simple, it is considered one dimensional. Fig. 6(a) shows the interpolation magnification of 1.0 times, Fig. 6(b) shows the interpolation magnification of 1.5 times, and Fig. 6(c) shows the interpolation magnification of 1.0001 times. Generally, when the interpolation magnification is expressed as irreducible fraction, the numerator (integer) indicates the period of the closest distance. When the numerator is small, the period is short, and when the numerator is large, the period is long. For example, in Fig. 6(a), the interpolation magnification is 1/1 and the closest distance is always 0. In Fig. 6(b), the interpolation magnification is 3/2, and the closest distance is 0 in a ratio of 1:3, and the closest distance is $\Delta$Xorg/3 in the remaining ratio 2:3. In Fig. 6 (c), the interpolation magnification is 10001/10000, and the closest distance exists in almost the same ratio between the range 0 and $\Delta$Xorg/2. That is, the closest distance indicates almost random values.

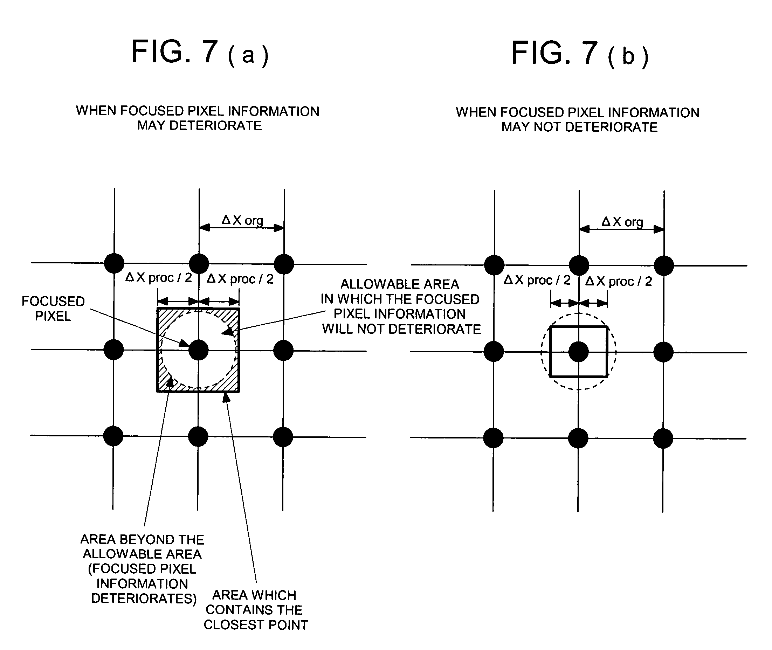

Fig. 7 is a schematic diagram of the closest distance when the distribution of the closest distance is uniform (Fig. 6(c)). Fig. 7(a) shows the case in which focused pixel information may deteriorate, and Fig. 7(b) shows the case in which there is no possibility of deterioration of the focused pixel information.

If the closest distance at all points is below $d\Delta$Xorg, $\Delta$Xorg < $\sqrt{2}d\Delta$Xorg

$$\therefore\ R > 1/(\sqrt{2}d)$$

The value (d) at which image signal information does not deteriorate before the interpolation processing is empirically expressed by d = 0.40 when a medical image is outputted, the value R > 1.8 is preferred.

As stated above, insight into the "preferred interpolation magnification of medical image" has been obtained based on the mathematical theory. This study has also been separately validated by means of sensory evaluation using live-action images.

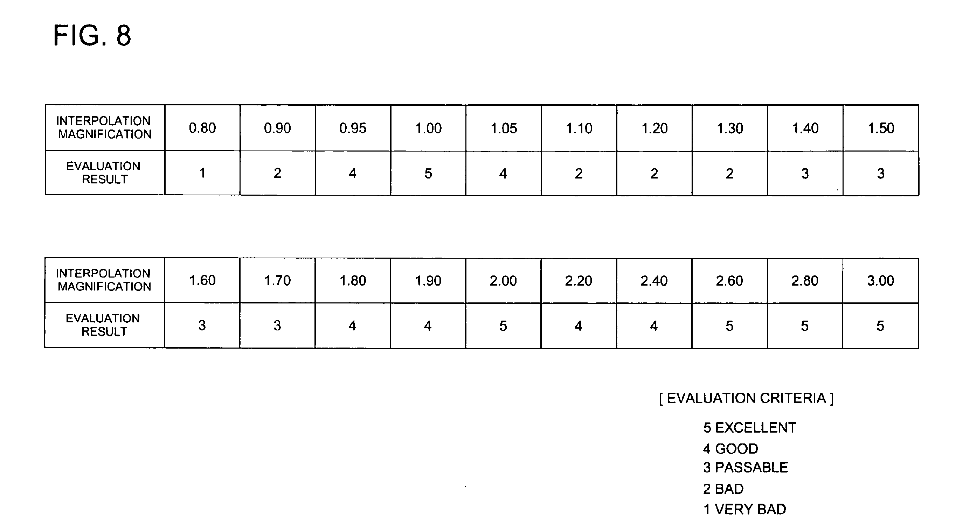

A part of the human body (skull bone) was radiographed, and the image was converted into digital image signal by an image forming apparatus, then the data was outputted according to the signal by a photothermal silver-halide imager. Three researchers who are engaged in the medical equipment development visually checked the images. The sensory evaluation results (average) are shown in Fig. 8. Evaluation was carried out according to the following five levels: 5 Excellent, 4 Good, 3 Passable, 2 Bad, 1 Very bad.

The sensory evaluation results indicated that evaluation of level 4 or higher was obtained when the interpolation magnification was 1.8 times or more, or approximately 1.0 times. Therefore, from the perspective of both the theory and the sensory evaluation, it was verified that R > 1.8 was the preferred interpolation magnification of the medical image.

Moreover, although diagnosis was not directly affected, visually evaluated results verified that the most preferable interpolation magnification should be an integer with respect to a geometrical figure, such as outline characters on a colored background, periodically arranged thin line, etc., and if the value is not an integer, image quality may deteriorate.

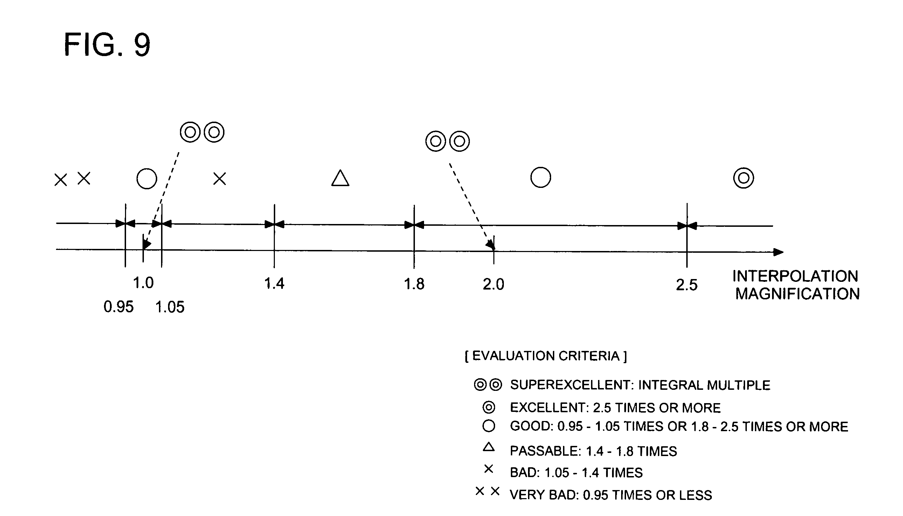

Fig. 9 shows sensory evaluation results shown in Fig. 8, and interpolation magnification R is indicated as a reference. With respect to a medical image for which extremely high image-quality level is required, interpolation magnification R that satisfies $1.4 \leq R \leq 1.8$ is preferable. Although the image quality slightly deteriorates, it can be corrected to some extent. Interpolation magnification R that satisfies R > 1.8, or approximately 1.0 which is where $0.95 \leq R \leq 1.05$ is more preferable because there is almost no deterioration of image quality. On the other hand, other ranges, that is, interpolation magnification R that satisfies R < 0.95 or 1.05 < R < 1.4 is not recommended because image quality deteriorates. Moreover, there was no difference between the diagnostic result in which interpolation magnification was an integral multiple and the diagnostic result in which interpolation magnification was non-integral multiple (e.g., 2.0 times and 2.1 times); however, by taking into consideration the character display capabilities, the image was evaluated as "Superexcellent" when the interpolation magnification was 2.0 times and "Good" when the interpolation magnification was not 2.0 times.

Next, in an image recorder which has a plurality of selectable writing pitches (n types, $n \geq 2$), preferred relationships among those writing pitches will be explained according to the results of the previously mentioned "Preferred interpolation magnification of medical image".

An arbitrary writing pitch can be selected from a plurality of writing pitches P1 through Pn (P1 < P2 < .. < Pn). For example, when Pi (i = 1, 2,.., n) is selected, let the interpolation magnification in the case of carrying out image interpolation processing for original image data be Ri.

Because the image output size is constant regardless of the writing pitch, there is a relationship expressed by Pi*Ri = constant. Accordingly, interpolation magnification Ri that uses writing pitch Pi can be expressed as follows by using interpolation magnification R1 that uses minimum writing pitch P1:

$$Ri = R1 \cdot P1/Pi$$

First, the preferred relationship between closest writing pitches, which are Pi (herein, i = 1, 2,.., n-1) and P(i+1), will be explained. To ensure an interpolation magnification which causes image quality to slightly deteriorate but can be corrected to some extent, it is preferred that 1.05 < P(i+1) > /Pi < 1.4 should be satisfied for any value of i. The reason for this is that the writing pitch can be selected so that it is not included within the range of interpolation magnification that satisfies 1.05 < R < 1.4 in which deterioration of image quality possibly occurs.

Next, the preferred relationship between minimum writing pitch P1 and different writing pitch Pi (herein, i = 2, 3,.., n) will be explained. To obtain high-quality images, it is recommended that images be recorded at maximum resolution of the image recorder and also preferably minimum writing pitch P1 is used.

However, when image data in which the interpolation magnification satisfies the range 1.05 < R1 < 1.8 when minimum writing pitch P1 is used is inputted into the image recorder, image quality may deteriorate due to the image interpolation processing when the image is recorded by using minimum writing pitch P1. Accordingly, when inputting image data in which 1.05 < R1 < 1.8 is satisfied into the image recorder, by selecting writing pitch Pi, other than P1, so that an interpolation magnification satisfies the range $0.95 \leq Ri \leq 1.05$ in which almost no deterioration of image quality occurs, it is possible to reduce deterioration of image quality resulting from the image interpolation processing.

Specifically, it is enough to select only Pi which satisfies $0.95 \leq Ri (=R1 \cdot P1/Pi) \leq 1.05$. If this equation is transformed, it appears as follows:

$$(R1/1.05) \leq (Pi/P1) \leq (R1/0.95) \qquad (*1)$$

If the above inequality is satisfied, even when image quality greatly deteriorates due to image interpolation processing when recording image using minimum writing pitch P1, it is possible to reduce deterioration of image quality by using different writing pitch Pi. For example, in the case R1 = 1.5, the inequality (*1) can be expressed by $1.43 \leq (Pi/P1) \leq 1.58$.

In the case of 1.0 < (Pi/P1) < 1.1, or 1.7 <(Pi/P1) < 1.9, image quality is sometimes the same whichever minimum writing pitch P1 or different writing pitch Pi is used. (Only when the inequality in both cases satisfies $0.95 \leq R1 \leq 1.05$.)

Furthermore, in the case of 1.1 < (Pi/P1) < 1.7, the interpolation magnification of the image interpolation processing that uses writing pitch Pi other than minimum writing pitch P1 can be sometimes superior in terms of image quality.

As stated above, when 1.0 < (Pi/P1) < 1.9 is satisfied, by using writing pitch Pi other than minimum writing pitch P1, it is possible to select an interpolation magnification which creates image quality that is comparable to, or better than the image quality when minimum writing pitch P1 is selected. When 1.1 < (Pi/P1) < 1.7 is satisfied, it is more preferable to select writing pitch Pi other than minimum writing pitch P1 because it is possible to select an interpolation magnification which enables superior image quality.

Furthermore, it is preferable that the number of Pi types "n" which satisfy the above range be as many as possible because as the number (n) increases, situations in which image quality deteriorates due to image interpolation processing decrease.

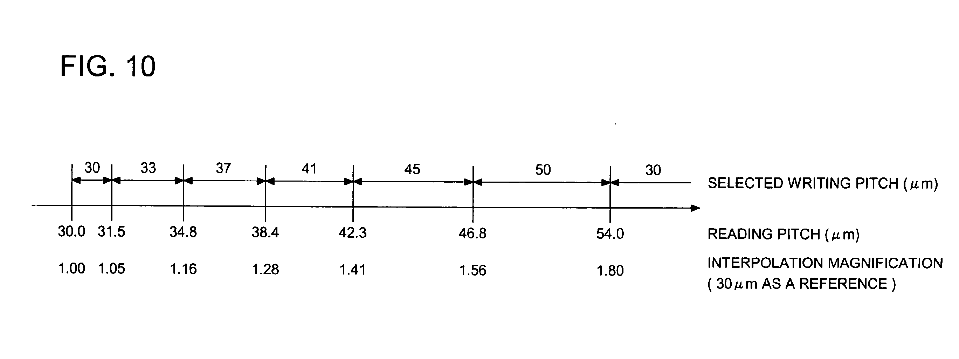

Therefore, for example, as Fig. 10 shows, when outputting a medical image having a reading pitch of 30 μm or more, by selecting a writing pitch from 30 μm (minimum pitch), 33 μm (1.10 times), 37 μm (1.23 times), 41 μm (1.37 times), 45 μm (1.50 times), and 50 μm (1.67 times), it is possible to cover almost all interpolation magnifications in the range between 1.05 and 1.8 times. Therefore, it is possible to select a preferred writing pitch which reduces deterioration of the image quality by using an arbitrary magnification of 1.0 times or more.

Moreover, as stated above, if many writing pitches can be selected in the image recorder 2, it is possible to reduce deterioration of image quality during the image interpolation processing thereby providing superfine medical images. However, in this embodiment, to increase general-purpose properties of the image recorder 2 as well as increase processing efficiency, a situation in which the image recorder 2 has two or three kinds of writing pitches was studied.

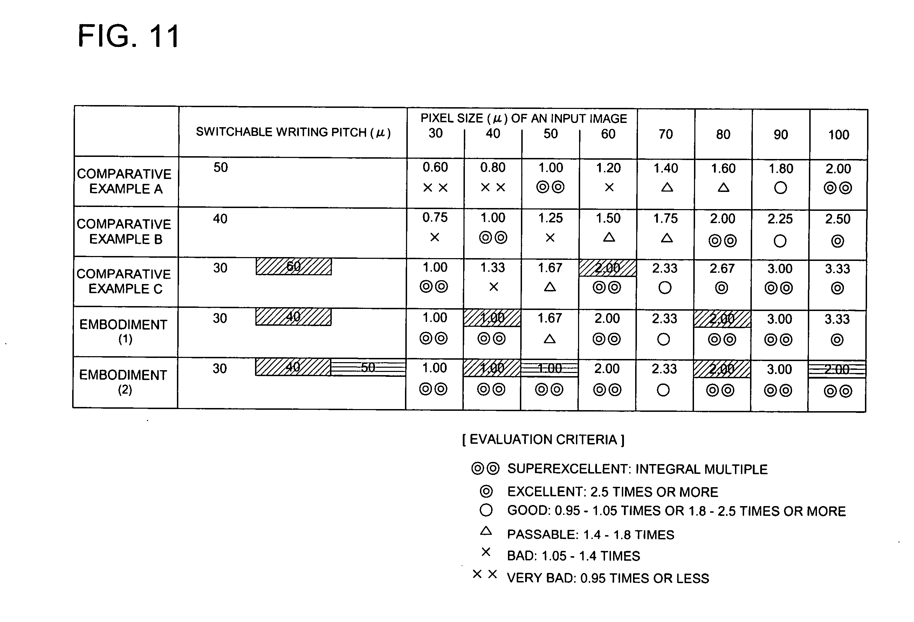

Fig. 11 shows evaluation results of medical image diagnostic performance in cases in which one to three kinds of writing pitches can be selected. The reading pitch for a sample medical image was specified by sampling 30 to 100 μm at 10 μm intervals. Furthermore, one writing pitch (50 μm) was provided in comparative example A, one writing pitch (40 μm) was provided in comparative example B, two kinds of writing pitches (30 μm, 60 μm) were provided in comparative example C, two kinds of writing pitches (30 μm, 40 μm) were provided in embodiment 1, and three kinds of writing pitches (30 μm, 40 μm, 50 μm) were provided in embodiment 2.

As Fig. 11 shows, in comparative example A, three kinds of reading pitches were evaluated as "Bad" or "Very bad", one reading pitch was evaluated as "Passable", and only three kinds of reading pitches were evaluated as "Good" or higher. In comparative example B, two kinds of reading pitches were evaluated as "Bad", two kinds of reading pitches were evaluated as "Passable", and four kinds of reading pitches were evaluated as "Good" or higher. In comparative example C, one reading pitch was evaluated as "Bad", one reading pitch was evaluated as "Passable", and six kinds of reading pitches were evaluated as "Good" or higher.

On the other hand, in embodiment 1, only one reading pitch was evaluated as "Passable", and seven kinds of reading pitches were evaluated as "Good" or higher. Among those, five kinds of reading pitches were evaluated as "Superexcellent". Moreover, in the table, the evaluation results with blank background indicate the application of 30-μm writing pitch, and the evaluation results with hatched background indicate the application of 40-μm writing pitch.

In embodiment 2, results were very good: all reading pitches were evaluated as "Superexcellent" with the exception of one which was evaluated as "Good". Incidentally, in the table, the evaluation results for a blank background indicate the application of 30-μm writing pitch, the evaluation results for a background hatched with slanted lines indicate the application of 40-μm writing pitch, and the evaluation results for a background hatched with horizontal lines indicate the application of 50-μm writing pitch.

As stated above, in cases in which a plurality of writing pitches can be selected, by switching two kinds of writing pitches, most of medical images having different reading pitches that are inputted from image forming apparatuses 1a through 1d can be handled. More preferably, by switching among three or more kinds of writing pitches, it is possible to carry out image interpolation processing for the medical images having different reading pitches while inhibiting image deterioration.

The interpolation magnification determination means 25 determines the optimal interpolation magnification in the aforementioned range (e.g. see embodiments 1 and 2 shown in Fig. 11) according to the medical image reading pitch inputted by the image data storage means 22 and the writing pitch of the image recording means 27, and then outputs the interpolation magnification to the image interpolation means 24. Furthermore, the interpolation magnification determination means 25 outputs the determined interpolation magnification to the writing pitch selection means 26 which will be described in the next paragraph.

The writing pitch selection means 26 determines the preferred writing pitch, which can reduce deterioration of image quality, according to the interpolation magnification inputted by the interpolation magnification determination means 25. It selects a preferred writing pitch from a plurality of selectable pitches and then outputs the selected writing pitch to the image recording means 27.

An appropriate method to determine the preferred writing pitch is to calculate an interpolation magnification for each writing pitch according to the provided reading pitch information, and to select the optimal interpolation magnification and writing pitch from among the best possible interpolation magnifications according to the evaluation criteria shown in Fig. 9.

For example,

1. If a magnification of integral multiple (1 time or 2 times) having the "Superexcellent" evaluation can be selected, select it.

2. If a magnification of 2.5 times or more which has the "Excellent" evaluation can be selected, select it.
3. If a magnification between 1.8 times and 2.5 times which has the "Good" evaluation can be selected, select it.
4. If a magnification between 0.95 times and 1.05 times (excluding 1.0 times) which has the "Good" evaluation can be selected, select it.
5. If a magnification between 1.4 times and 1.8 times which has the "Passable" evaluation can be selected, select it.
6. In cases other than the above, select the magnification between 1.05 times and 1.4 times.

As described above, all that has to be done is to set the evaluation criteria which specify priorities from 1 to 6, and determine the optimal interpolation magnification and writing pitch in accordance with the evaluation criteria.

Furthermore, as Fig. 10 shows, an alternative preferred method is to create in advance a table for associating reading pitches with writing pitches and directly determine the preferred writing pitch based on the provided reading pitch information.

For example, when a reading pitch is between 30.0 and 31.5 μm, select 30 μm as a writing pitch, and when a reading pitch is between 46.8 and 54.0 μm, select 50 μm as a writing pitch.

Furthermore, as the interpolation magnification increases, deterioration of image quality decreases. Therefore, in most cases, minimum writing size is selected. However, to compensate it, size of the image data becomes large after interpolation processing has been applied, thereby increasing the processing time. Therefore, by taking into consideration the interpolation processing time and memory area, it is preferable to select a writing pitch so that the interpolation magnification does not exceed a prescribed value.

Once the interpolation magnification is determined, the size of image data after the interpolation processing has been applied is primarily determined. Therefore, determining the interpolation magnification is essentially equal to determining the size of image data after the interpolation processing has been applied.

For example, the image recording means 27, which is configured by a thermal recorder that uses an X-ray laser or heat mode laser, exposes a recording medium to a laser beam which has been inputted by the image processing means 23 and modulated according to medical image data, thereby forming a latent image. The image recording means 27 then heats the medium and develops the colors within the portion of the medium that has been exposed thereby converting the latent image into a visible image. The image recording means 27 adjusts the diameter of the laser beam to be outputted in accordance with the writing pitch outputted by the writing pitch selection means 26, and records medical images on the recording medium using one of the aforementioned 30 µm, 40 µm, and 50 µm writing pitches.

Thermal developing and recording material or photosensitive thermal recording material is used as a recording medium on which medical images are recorded. In the recording medium, exposure of a photocatalyst, such as photosensitive silver halide, creates a latent image, and by heating the image, silver in the organic silver-halide ionized by the action of the reducing agent is transferred and combines with photosensitive silver halide to form crystal silver, thereby forming a visible image.

The input means 28, consisting of a keyboard, mouse, etc., creates an indication signal according to the inputted indication and outputs the signal to the image processing means 23.

The display means 29, usually a CRT (Cathode Ray Tube), LCD (Liquid Crystal Display), plasma display, etc., displays information.

As stated above, in the image recorder 2 equipped with an image recording means 27 which switches a plurality of writing pitches and records medical images on a recording medium, the interpolation magnification determination means 25 determines the interpolation magnification for the optimal image interpolation processing according to the inputted medical image reading pitch and selectable writing pitches. Then, the image interpolation means 24 carries out image interpolation processing at the determined interpolation magnification. The writing pitch selection means 26 then selects a preferred writing pitch based on the interpolation magnification, and the image recording means 27 switches to the selected writing pitch and records the medical image on the recording medium.

For example, in a medical image system which incorporates a plurality of image forming apparatuses 1a through 1d via network N, even when medical images having a plurality of different reading pitches are inputted, by switching the writing pitch of the image recording means 27 according to the medical image reading pitch, high-quality medical images can be formed while deterioration of image quality is minimized.

Furthermore, because it is possible to determine the preferred interpolation magnification according to the medical image reading pitch and selectable writing pitches of the image recorder 2 and conduct image interpolation processing, it is possible to prevent deterioration of image quality, such as decrease in sharpness or distortion, associated with the image interpolation processing, thereby forming superfine medical images.

Furthermore, by providing at least two, preferably three or more, kinds of selectable writing pitches for the recording image means 27, it is possible to select a preferred writing pitch for medical images having a wide range of reading pitches and form high-quality medical images. Consequently, this configuration can be applied to a medical image system 100 that has high general-purpose properties and which is equipped with a variety of image forming apparatuses. This system is sufficiently effective when two kinds of writing pitches are provided, however, it is preferable to provide three or more kinds of writing pitches because a relatively wide range of reading pitches which do not conform to the minimum writing pitch can be handled by other writing pitches. Furthermore, it is more preferable to provide four or more kinds of writing pitches because most of the range of reading pitches which do not conform to the minimum writing pitch can be handled by other writing pitches.

Moreover, for the interpolation magnification to be 0.95 or more, it is preferable that the writing pitch be smaller than the reading pitch. In addition, it is preferable that the writing pitch be small enough to display a target area in minute detail. Accordingly, as the writing pitch is smaller, the interpolation magnification and display capability becomes more advantageous.

For example, to be able to output an image including information of spatial frequency that corresponds to 10 Cy/mm, it is preferable that the minimum writing pitch P1 be 50 µm or less. Judging from the reading pitch 50 µm or less which is required for forming high-quality mammography image data, it is preferable that the writing pitch be also 50 µm or less.

Furthermore, to be able to output an image including information of spatial frequency that corresponds to 14 Cy/mm, it is preferable that the minimum writing pitch P1 be 35 µm or less. If the writing pitch is 35 µm or less, the interpolation magnification for reading pitch 50 µm required for forming mammography images is 1.4 times or more. Therefore, it is preferable that the writing pitch be 35 µm or less because minimum image quality is guaranteed (see Fig. 9).

The aforementioned description provided in this embodiment is an example of a preferred medical image system 100 according to the present invention, and the present invention is not to be considered limited to this embodiment. For example, the kinds of selectable writing pitches for the image recorder 2 mentioned are an example that the present invention can apply, and it will be appreciated that there are various other writing pitches which can be applied.

Furthermore, the image recording means 27 is not to be considered limited to the thermal recorder that uses an X-ray laser or heat mode laser. It can be a direct-thermal recorder having a thermal head or a sublimation thermaltransfer recorder.

Each of the components which make up an image recorder 2 according to the present invention and each specific operation can be changed within the range that conforms to the concept of the present invention.

Disclosed embodiment can be varied by a skilled person without departing from the spirit and scope of the invention.

## Claims

**1.** An apparatus for recording a medical image, comprising:

an image recording section to record said medical image onto a recording medium with a writing pitch selected from a plurality of writing pitches P1 --- Pn, which fulfill the following relationship,

$$P1 < P2 < --- < Pn, n \geq 2;$$

an interpolating-magnification-factor determining section to determine an interpolating magnification factor, corresponding to a reading pitch employed for reading said medical image and each of said plurality of writing pitches P1 --- Pn;
an image interpolating section to apply an image interpolation processing to said medical image, based on said interpolating magnification factor determined by said interpolating-magnification-factor determining section; and
a writing-pitch selecting section to select an appropriate writing pitch out of said plurality of writing pitches P1 --- Pn;

wherein said appropriate writing pitch fulfills the following relationship,

$$1.0 < Pi/P1 < 1.9$$

where Pi: said appropriate writing pitch,

$$i = 2, ---, n.$$

**2.** The apparatus of claim 1,
wherein said appropriate writing pitch fulfills the following relationship,

$$1.1 < Pi/P1 < 1.7$$

where Pi: said appropriate writing pitch,

$$i = 2, ---, n.$$

**3.** The apparatus of claim 1,
wherein said writing-pitch selecting section selects said appropriate writing pitch out of said plurality of writing pitches P1 --- Pn, based on said interpolating magnification factor determined by said interpolating-magnification-factor determining section.

**4.** The apparatus of claim 1,
wherein, with respect to said plurality of writing pitches P1 --- Pn, the following equation is fulfilled,

$$n \geq 3.$$

**5.** The apparatus of claim 1,
wherein, with respect to writing pitch P1, the following equation is fulfilled,

$$P1 \leq 50 \ \mu m.$$

**6.** The apparatus of claim 1,
wherein, with respect to writing pitch P1, the following equation is fulfilled,

$$P1 \leq 35 \ \mu m.$$

**7.** The apparatus of claim 1,
wherein a silver-halide photo-thermal recording method is employed in said image recording section to record said medical image onto said recording medium.

**8.** An apparatus for recording a medical image, comprising:

an image recording section to record said medical image onto a recording medium with a writing pitch selected from a plurality of writing pitches P1 --- Pn, which fulfill the following relationship,

$$P1 < P2 < --- < Pn, n \geq 2;$$

an interpolating-magnification-factor determining section to determine an interpolating magnification factor, corresponding to a reading pitch employed for reading said medical image and each of said plurality of writing pitches P1 --- Pn;
an image interpolating section to apply an image interpolation processing to said medical image, based on said interpolating magnification factor determined by said interpolating-magnification-factor determining section; and
a writing-pitch selecting section to select an appropriate writing pitch out of said plurality of writing pitches P1 --- Pn;

wherein each of said plurality of writing pitches P1 --- Pn fulfills the following relationship,

$$1.05 < P(j + 1)/Pj < 1.4$$

where Pj: j = 1, 2, ---, n.

9.  The apparatus of claim 8,
    wherein said writing-pitch selecting section selects said appropriate writing pitch out of said plurality of writing pitches P1 --- Pn, based on said interpolating magnification factor determined by said interpolating-magnification-factor determining section.

10. The apparatus of claim 8,
    wherein, with respect to said plurality of writing pitches P1 --- Pn, the following equation is fulfilled,

$$n \geq 3.$$

11. The apparatus of claim 8,
    wherein, with respect to writing pitch P1, the following equation is fulfilled,

$$P1 \leq 50 \ \mu m.$$

12. The apparatus of claim 8,
    wherein, with respect to writing pitch P1, the following equation is fulfilled,

$$P1 \leq 35 \ \mu m.$$

13. The apparatus of claim 8,
    wherein a silver-halide photo-thermal recording method is employed in said image recording section to record said medical image onto said recording medium.

FIG. 1

# FIG. 2

21 IMAGE DATA INPUT MEANS

22 IMAGE DATA STORAGE MEANS

25 INTERPOLATION MAGNIFICATION DETERMINATION MEANS

24 IMAGE INTERPOLATION MEANS

26 WRITING PITCH SELECTION MEANS

23 IMAGE PROCESSING MEANS

27 IMAGE RECORDING MEANS

28 INPUT MEANS

29 DISPLAY MEANS

2

FIG. 3

X

Y

1-pix INTERVAL
($\Delta X \text{org}$)

SAMPLE
POINT

RE-SAMPLE
POINT

FIG. 4

EP 1 510 968 A2

# FIG. 5 (a)

| | | | |
|---|---|---|---|
| 0.00 | 0.00 | 0.00 | 0.00 |
| 0.00 | 0.00 | 0.00 | 0.00 |
| 0.00 | 0.00 | 1.00 | 0.00 |
| 0.00 | 0.00 | 0.00 | 0.00 |

# FIG. 5 (b)

| | | | |
|---|---|---|---|
| 0.00 | 0.00 | -0.01 | 0.00 |
| 0.00 | 0.00 | 0.20 | 0.00 |
| -0.01 | 0.20 | 0.63 | -0.03 |
| 0.00 | -0.01 | -0.03 | 0.00 |

FIG. 6 (a)

FIG. 6 (b)

FIG. 6 (c)

# FIG. 7 (a)

WHEN FOCUSED PIXEL INFORMATION
MAY DETERIORATE

$\Delta X$ org

$\Delta X$ proc / 2   $\Delta X$ proc / 2

FOCUSED
PIXEL

ALLOWABLE AREA
IN WHICH THE FOCUSED
PIXEL INFORMATION
WILL NOT DETERIORATE

AREA BEYOND THE
ALLOWABLE AREA
(FOCUSED PIXEL
INFORMATION
DETERIORATES)

AREA WHICH
CONTAINS THE
CLOSEST POINT

# FIG. 7 (b)

WHEN FOCUSED PIXEL INFORMATION
MAY NOT DETERIORATE

$\Delta X$ org

$\Delta X$ proc / 2   $\Delta X$ proc / 2

EP 1 510 968 A2

# FIG. 8

| INTERPOLATION MAGNIFICATION | 0.80 | 0.90 | 0.95 | 1.00 | 1.05 | 1.10 | 1.20 | 1.30 | 1.40 | 1.50 |
|---|---|---|---|---|---|---|---|---|---|---|
| EVALUATION RESULT | 1 | 2 | 4 | 5 | 4 | 2 | 2 | 2 | 3 | 3 |

| INTERPOLATION MAGNIFICATION | 1.60 | 1.70 | 1.80 | 1.90 | 2.00 | 2.20 | 2.40 | 2.60 | 2.80 | 3.00 |
|---|---|---|---|---|---|---|---|---|---|---|
| EVALUATION RESULT | 3 | 3 | 4 | 4 | 5 | 4 | 4 | 5 | 5 | 5 |

[ EVALUATION CRITERIA ]

5 EXCELLENT
4 GOOD
3 PASSABLE
2 BAD
1 VERY BAD

# FIG. 9

1.0    1.4    1.8    2.0    2.5    INTERPOLATION
                                  MAGNIFICATION

0.95  1.05

[ EVALUATION CRITERIA ]

◎◎  SUPEREXCELLENT: INTEGRAL MULTIPLE

◎  EXCELLENT: 2.5 TIMES OR MORE

○  GOOD: 0.95 - 1.05 TIMES OR 1.8 - 2.5 TIMES OR MORE

△  PASSABLE: 1.4 - 1.8 TIMES

✕  BAD: 1.05 - 1.4 TIMES

✕✕  VERY BAD: 0.95 TIMES OR LESS

EP 1 510 968 A2

FIG. 10

EP 1 510 968 A2

|  | 30 | 33 | 37 | 41 | 45 | 50 | 30 | SELECTED WRITING PITCH ($\mu$m) |

30.0  31.5    34.8    38.4    42.3    46.8    54.0    READING PITCH ($\mu$m)

1.00  1.05    1.16    1.28    1.41    1.56    1.80    INTERPOLATION MAGNIFICATION
( 30$\mu$m AS A REFERENCE )

# FIG. 11

| | SWITCHABLE WRITING PITCH (μ) | PIXEL SIZE (μ) OF AN INPUT IMAGE | | | | | | | |
|---|---|---|---|---|---|---|---|---|---|
| | | 30 | 40 | 50 | 60 | 70 | 80 | 90 | 100 |
| COMPARATIVE EXAMPLE A | 50 | 0.60 ×× | 0.80 ×× | 1.00 ◎◎ | 1.20 × | 1.40 △ | 1.60 △ | 1.80 ○ | 2.00 ◎◎ |
| COMPARATIVE EXAMPLE B | 40 | 0.75 × | 1.00 ◎◎ | 1.25 × | 1.50 △ | 1.75 △ | 2.00 ◎◎ | 2.25 ○ | 2.50 ◎ |
| COMPARATIVE EXAMPLE C | 30  60 | 1.00 ◎◎ | 1.33 × | 1.67 △ | 2.00 ◎◎ | 2.33 ○ | 2.67 ◎ | 3.00 ◎◎ | 3.33 ◎ |
| EMBODIMENT (1) | 30  40 | 1.00 ◎◎ | 1.00 ◎◎ | 1.67 △ | 2.00 ◎◎ | 2.33 ○ | 2.00 ◎◎ | 3.00 ◎◎ | 3.33 ◎ |
| EMBODIMENT (2) | 30  40  50 | 1.00 ◎◎ | 1.00 ◎◎ | 1.00 ◎◎ | 2.00 ◎◎ | 2.33 ○ | 2.00 ◎◎ | 3.00 ◎◎ | 2.00 ◎◎ |

[ EVALUATION CRITERIA ]

◎◎  SUPEREXCELLENT: INTEGRAL MULTIPLE

◎  EXCELLENT: 2.5 TIMES OR MORE

○  GOOD: 0.95 - 1.05 TIMES OR 1.8 - 2.5 TIMES OR MORE

△  PASSABLE: 1.4 - 1.8 TIMES

×  BAD: 1.05 - 1.4 TIMES

××  VERY BAD: 0.95 TIMES OR LESS

EP 1 510 968 A2